# EUROPÄISCHE PATENTSCHRIFT

(11) **EP 2 138 431 B1**
(45) Veröffentlichungstag und Bekanntmachung des Hinweises auf die Patenterteilung: **01.05.2013**
(21) Anmeldenummer: 09163434.5
(22) Anmeldetag: 23.06.2009
(51) Int. Cl.: B65G 17/32, B65G 47/84, B65G 47/90

(54) **Wechselbares Greifelement zum Transportieren von Behältnissen**
Exchangeable grip element for transporting containers
Elément de préhension changeable destiné au transport de récipients

(30) Priorität: 24.06.2008 DE 102008029711
(43) Veröffentlichungstag der Anmeldung: 30.12.2009
(73) Patentinhaber: Krones AG, 93073 Neutraubling (DE)
(72) Erfinder: Winzinger, Frank, 85354 Freising (DE); Sternkopf, Bernhard, 93133, Burglengenfeld (DE); Höllriegl, Thomas, 93158, Teublitz (DE)
(74) Vertreter: Bittner, Bernhard

(56) Entgegenhaltungen:
- WO-A1-2007/144262
- WO-A1-2008/106922
- WO-A1-2009/127334
- DE-A1-102006 012 020
- DE-A1-102006 033 512
- FR-A1- 2 903 927
- JP-A- 59 001 187
- JP-A- 2005 131 718
- US-A- 4 636 135
- US-A- 5 893 700
- US-A1- 2005 269 188

## Beschreibung

Die vorliegende Erfindung bezieht sich auf eine Greifvorrichtung zum Greifen von Behältnissen. Im Bereich der getränkeherstellenden Industrie ist es üblich, dass während der Herstellung von Kunststoffbehältnissen diese mittels Greifklammern befördert werden. Dabei ist es möglich, dass eine bestimmte Greifklammer das Behältnis fördert und an eine weitere Greifklammer übergibt. Die WO 2007/144262 beschreibt eine Greifeinrichtung für Behälter gemäß dem Oberbegriffen der Ansprüche 1, 2 und 3. Dabei ist eine Greifklammer vorgesehen, die zwei zusammenwirkende Greifbereiche aufweist, welche die Behältnisse von zwei Seiten greifen. Die Bewegung dieser Greifbereiche ist dabei miteinander gekoppelt, so dass die Betätigung eines Bereiches eine Betätigung des anderen Bereiches nach sich zieht. Die beiden Greifbereiche bzw. Kiefer sind dabei jeweils einteilig mit den zusammenwirkenden Mitteln ausgebildet.

Aus der WO 00/76746 A1 ist ein Greifer zum Transportieren von Behältnissen bekannt. Dabei ist dieser Greifer auf einen Träger angeordnet und kann durch Bewegungen ausgehend von diesem Träger geöffnet oder geschlossen werden.

Aus der US 6,612,634 B1 ist ein weiterer Greifer zum Greifen von Vorformlingen bekannt, wobei hier an einem Betätigungsarm und einer Trägerplatte ebenfalls zwei Greifbacken vorgesehen sind, welche die Behältnisse greifen

Im Stand der Technik ist es oft wünschenswert, die Greifelemente auszutauschen, beispielsweise wenn sie abgenutzt sind oder für eine andere Gattung an Behältnissen andere Greifelemente erforderlich sind.

Der vorliegenden Erfindung liegt daher die Aufgabe zugrunde, ein Greifelement bzw. eine Klammer zu schaffen, welche schnell auswechselbar ist, um auf diese Weise die Zeiten für einen Systemwechsel zu reduzieren. Dies wird erfindungsgemäß durch eine Greifvorrichtung nach Anspruch 1, 2 oder 3 erreicht. Vorteilhafte Ausführungsformen und Weiterbildungen sind Gegenstand der Unteransprüche.

Eine erfindungsgemäße Greifvorrichtung zum Greifen von Behältnissen weist ein Greifelement auf, welches zwei zueinander relativ bewegliche Greifteile aufweist, wobei zwischen diesen Greifteilen wenigstens ein Abschnitt des zu greifenden Behältnisses aufnehmbar ist. Weiterhin weist die Greifvorrichtung einen Träger auf, an dem die Greifteile angeordnet sind, wobei die Greifteile in einer vorgegebenen Bewegungsebene schwenkbar sind.

Erfindungsgemäß weist die Greifvorrichtung einen Lösemechanismus auf, um die Greifteile von dem Träger zu lösen, wobei dieser Lösemechanismus manuell und ohne Zuhilfenahme von Werkzeug betätigbar ist, um die Greifteile von dem Träger zu lösen.

Bevorzugt weist der Lösemechanismus ein manuell betätigbares Betätigungselement auf, durch dessen Betätigung die Greifteile von dem Träger lösbar sind.

Während im Stand der Technik stets der Einsatz von speziellen Montagewerkzeugen, wie Schraubenziehern erforderlich ist, um die Greifteile von ihrem Träger zu lösen, können bei der erfindungsgemäßen Ausführungsform die Greifteile ohne den Einsatz von Werkzeug, d.h. insbesondere von Hand von dem Träger gelöst werden.

Erfindungsgemäß ist an jedem Greifteil ein stiftartiger Körper angeordnet, wobei sich die stiftartigen Körper im Wesentlichen senkrecht zu der Bewegungsebene der Greifteile erstrecken und die Greifteile jeweils um eine durch die stiftartigen Körper festgelegte Schwenkachse schwenkbar sind. Die Ebene, in der die Greifteile schwenkbar sind, ist bevorzugt auch diejenige Ebene, in der sich die Greifteile erstrecken. Vorzugsweise handelt es sich hier um eine im Wesentlichen horizontale Ebene. Unter im Wesentlichen senkrecht wird dabei verstanden, dass sich eine Längsrichtung der stiftartigen Körper gegenüber der Bewegungsebene in einem Winkel erstreckt, der zwischen 80° und 100° und bevorzugt zwischen 85° und 95° liegt.

Bei den Greifteilen handelt es sich insbesondere um Backen oder Klauen, zwischen denen ein Behältnis und insbesondere ein Hals des Behältnisses aufnehmbar ist. Um ein Behältnis greifen zu können, ist es möglich, die beiden Greifteile zusammen- bzw auseinananderzuschwenken.

Unter einer Anordnung der Greifteile an dem Träger wird insbesondere verstanden, dass die stiftartigen Körper in diesen Träger eingeschoben werden können. Damit wird zu einem Wechsel des Greifelements ein Mechanismus verwendet, mit dessen Hilfe die Greifteile und die daran angeordneten stiftartigen Körper aus dem Träger entnommen werden können. Die stiftartigen Körper dienen daher einerseits zum Bewegen der Greifteile (bzw. zum Stabilisieren dieser Bewegung) und anderseits auch als Arretierung gegenüber dem Träger. Die stiftartigen Körper sind bevorzugt fest an den Greifteilen angeordnet und dienen zum Befestigen der Greifteile an dem Träger, bzw. zur Fixierung der Greifteile in der Höhe.

Bei einer bevorzugten Ausführungsform ist um wenigstens einen Bereich jedes stiftartigen Körpers ein Hülsenkörper angeordnet. Dieser Hülsenkörper dient zur Führung des stiftartigen Körpers und setzt damit auch die Greifteile in allen Richtungen derart fest, dass diese im eingebauten Zustand im Wesentlichen nur um eine Achse der jeweiligen stiftartigen Körper schwenkbar sind. Die Hülsenkörper sind bevorzugt vollständig im Inneren des Trägers angeordnet. Die hülsenförmigen dienen zum Schwenken der Greifteile. Es wäre jedoch auch möglich, dass die stiftartigen Körper dazu verwendet werden, um die Greifteile um diese herum zu schwenken, um beispielsweise von einer Öffnungs- in eine Schließstellung dieser Greifvorrichtung überzugehen.

Bei einer weiteren vorteilhaften Ausführungsform der Erfindung nach Anspruch 1 ist wenigstens ein stiftartiger Körper gegenüber dem ihm zugeordneten Hülsenkörper in einer Längsrichtung des stiftartigen Körpers verschiebbar. Durch diese Verschiebung kann ein Lösen der Greifteile von einem Träger und damit ein Wechseln des Greifelementes erreicht werden. Vorzugsweise sind beide stiftartigen Körper gegenüber dem Hülsenkörper verschiebbar. Zum Wechseln werden dabei insbesondere beide Greifteile gleichzeitig gegenüber dem Hülsenkörper und damit auch dem Träger verschoben.

Bei einer weiteren vorteilhaften Ausführungsform weist wenigstens ein hülsenförmiger Körper in wenigstens einem Abschnitt und bevorzugt einem Endabschnitt einen von einer Kreisform abweichenden Querschnitt aufweist. In diesem Fall werden die Drehmomente auf die Greifteile über die hülsenförmigen Körper (und damit nicht oder nicht nur die stiftartigen Körper) übertragen. Vorzugsweise wird dabei der Hülsenkörper gedreht und mit ihm die stiftartigen Körper. Besonders bevorzugt weist der Hülsenkörper einen Vierkant - Abschnitt auf.

Auch wäre es möglich, dass wenigstens ein stiftartiger Körper in wenigstens einem Abschnitt einen von einer Kreisform abweichenden Querschnitt auf. Mittels dieses von dem kreisförmigen Querschnitt abweichenden Querschnitts ist es möglich, die beiden stiftartigen Körper für ihre Schwenkbewegungen zu betätigen. Vorzugsweise weist der stiftartige Körper einen kantigen und insbesondere quadratischen Querschnitt in dem besagten Bereich auf. Vorzugsweise wird dabei der Hülsenkörper gedreht und mit ihm die stiftartigen Körper. Bevorzugt handelt es sich bei den stiftartigen Körpern um Bolzen, die fest und besonders bevorzugt einteilig mit dem jeweiligen Greifteilen ausgebildet sind.

Bei einer weiteren vorteilhaften Ausführungsform weist die Vorrichtung Eingriffsmittel auf, welche die Hülsenkörper drehfest mit den Greifteilen verbinden. Damit ist zwar ein Verschieben der Greifteile gegenüber den Hülsenkörpern möglich, bei einer Drehung der Hülsenkörper werden jedoch die Greifteile mitgenommen. Dabei kann es sich beispielsweise bei den Eingriffsmitteln um einen kantigen Innenquerschnitt der Hülsenkörper handeln, die an einen entsprechenden kantigen Außenquerschnitt der stiftförmigen Körper angepasst sind. Weiterhin wäre es auch möglich, in dem Greifteil eine Eingriffsnut vorzusehen, in welche ein (End)abschnitt der jeweiligen Hülsenkörper eingreift. Umgekehrt kann in den Greifteilen auch ein Vorsprung vorgesehen sein, der in eine Nut des Hülsenkörpers eingreift.

Bei einer weiteren vorteilhaften Ausführungsform ist zwischen den Greifteilen eine Federungseinrichtung vorgesehen, welche bevorzugt die Greifteile zusammenzieht. Es wäre jedoch auch möglich, die Federeinrichtung in Form einer Druckfeder auszugestalten, welche die Greifteile auseinanderdrängt.

Damit kann es sich bei dieser Ausführungsform bei der Greifvorrichtung sowohl um eine selbstöffnende Greifvorrichtung d.h. eine Greifvorrichtung, welche gegen die Kraft der besagten Federungseinrichtung insbesondere mit einer Kurvenbahn, geschlossen wird, handeln, als auch um eine selbst schließende Greifvorrichtung.

Bei einer weiteren vorteilhaften Ausführungsform weisen die Hülsenkörper zusammenwirkende Eingriffsmittel auf oder sind mit zusammenwirkenden Eingriffsmittel in Verbindung, welche bewirken, dass bei Drehung eines Hülsenkörpers auch der andere Hülsenkörper mitgedreht wird. Damit genügt es, einen der beiden Hülsenkörper zu betätigen, um ein Öffnen bzw. Schließen der Greifvorrichtung zu erreichen. Vorzugsweise handelt es sich um ineinandergreifende Zähne bzw. einen Zahn eines Hülsenkörpers, der in eine Ausnehmung des anderen Hülsenkörpers bzw. des anderen Eingriffsmittels eingreift.

Vorzugsweise ist an einem Hülsenkörper ein Betätigungsarm angeordnet. Dieser Betätigungsarm erstreckt sich vorzugsweise in einer Ebene, welche parallel zur Ebene des Greifteils angeordnet ist. Durch diesen Betätigungsarm bzw. ein Schwenken um die Achse des entsprechenden stiftartigen Körpers kann die Greifeinrichtung geöffnet bzw. geschlossen werden.

Vorzugsweise weist die Vorrichtung einen Betätigungshebel auf, der zur Herbeiführung einer Schwenkbewegung des Betätigungsarms mit diesem zusammenwirkt. Dabei ist besonders bevorzugt der Betätigungshebel schwenkbar bezüglich des Betätigungsarms. Vorzugsweise ist dabei der Betätigungshebel nur in einem geringen Winkelmaß gegenüber dem Betätigungsarm schwenkbar, beispielsweise um einen Winkel von 1° - 10°, bevorzugt zwischen 2° und 8°. Durch diese leichte Schwenkbarkeit können die Kurvenbahnen leichter bewältigt werden. Vorzugsweise ist der Betätigungsarm in einem mittleren Bereich des stiftartigen Körpers bzw. der Wellen angeordnet d.h. in einem mittleren Bereich bezüglich der Längsrichtung der besagten stiftartigen Körper. Auf diese Weise ist eine besonders günstige Kraftübertragung zur Betätigung der Greifelemente möglich, da die stiftartigen Körper oberhalb und unterhalb des Bereichs des Betätigungsarms geführt sind. Vorzugsweise erstreckt sich der Betätigungsarm in einer Ebene, welche parallel zu der Bewegungsebene der Greifteile liegt.

Bei einer weiteren vorteilhaften Ausführungsform ist der Betätigungshebel mit einer Federungseinrichtung belastet.

Bei einer weiteren bevorzugten Ausführungsform weist die Greifvorrichtung ein zwischen den Greifteilen und dem Träger angeordnetes Verbindungselement auf, wobei dieses Verbindungselement wenigstens von den Greifteilen oder von dem Träger manuell lösbar ist. Genauer gesagt ist dieses Verbindungselement bevorzugt an einer Halterung angeordnet, wobei an dieser Halterung auch die Greifteile angeordnet sind. Diese Halterung kann von dem Träger gelöst werden.

Bei einer weiteren vorteilhaften Ausführungsform ist an dem Träger ein erstes Einrastmittel vorgesehen, welches (in zusammengesetztem Zustand) mit einem an wenigstens einem stiftartigen Körper vorgesehenen zweiten Einrastmittel zusammenwirkt. Mit Hilfe dieser Einrastmittel kann eine Schnell - Lösung der stiftartigen Körper und damit auch der Greifteile erreicht werden. Auf diese Weise wird ein schnell wechselbares System zur Verfügung gestellt.

Bei einer weiteren vorteilhaften Ausführungsform ist in einem oberen Abschnitt der stiftartigen Körper d.h. in demjenigen Bereich der stiftartigen Körper, der den Greifteilen gegenüberliegt, eine Nut angeordnet, in welcher ein Bereich dieses ersten Einrastmittels eingreift. Auf diese Weise ist es möglich, die stiftartigen Körper in ihrer Längsrichtung zu arretieren.

Bei einer weiteren vorteilhaften Ausführungsform sind die stiftartigen Körper gegenüber dem ersten Eingriffsmittel drehbar. Auf diese Weise wird erreicht, dass durch das zweite Einrastmittel die Drehbewegung der stiftartigen Körper und damit auch der Greifteile nicht gehemmt wird.

Bei einer weiteren bevorzugten Ausführungsform sind die stiftartigen Körper mittels wenigstens einer Vorspanneinrichtung gegenüber dem Träger vorgespannt.

Bei einer weiteren bevorzugten Ausführungsform sind die Eingriffsmittel von den stiftartigen Körpern in einer radialen Richtung der stiftartigen Körper vollumfänglich beabstandet. Auf diese Weise wird erreicht, dass die stiftartigen Körper zum Wechseln der Greifteile einfach gegenüber den Eingriffsmitteln verschoben werden können.

Weiterhin kann eine Transporteinrichtung mit einer Vielzahl von Greifvorrichtungen der oben beschriebenen Art versehen werden Dabei ist es möglich, dass die einzelnen Greifvorrichtungen beispielsweise an einer Transportkette angeordnet sind, es wäre jedoch auch möglich, dass mehrere Greifvorrichtung der oben beschriebenen Art beispielsweise an einem Transferstern vorgesehen sind.

Weitere Vorteile und Ausführungsformen ergeben sich aus den beigefügten Zeichnungen:
Darin zeigen:
   - Fig. 1: eine Gesamtdarstellung einer erfindungsgemäßen Greifvorrichtung;
   - Fig. 2: eine Teildarstellung der Greifvorrichtung aus Fig. 1;
   - Fig. 3: eine geschnittene Darstellung der Greifvorrichtung aus Fig. 2;
   - Fig. 4: eine Draufsicht auf den Schnitt aus Fig. 3;
   - Fig. 5: eine Detailansicht der erfindungsgemäßen Greifvorrichtung;
   - Fig. 6: eine perspektivische Darstellung des in Fig. 5 gezeigten Details der Greifvorrichtung;
   - Fig. 7: eine weitere perspektivische Darstellung des in Fig. 5 gezeigten Details der Greifvorrichtung;
   - Fig. 8: eine weitere Ansicht zur Veranschaulichung einer erfindungsgemäßen GreifVorrichtung;
   - Fig. 9: eine Ansicht des Details aus Fig. 8 von unten;
   - Fig. 10: ein weiteres Detail der erfindungsgemäßen Greifvorrichtung;
   - Fig. 11: eine perspektivische Darstellung einer erfindungsgemäßen Greifvorrichtung;
   - Fig. 12: eine Gesamtdarstellung einer erfindungsgemäßen Greifvorrichtung in einer weiteren Ausführungsform;
   - Fig. 13: eine Draufsicht auf die Vorrichtung aus Fig. 12;
   - Fig. 14: eine Ansicht von vorne auf die Greifvorrichtung aus Fig. 12;
   - Fig. 15: eine Seitenansicht der Greifvorrichtung aus Fig. 12:
   - Fig. 16: zwei Darstellungen der Greiffvorrichtung zur Veranschaulichung verschiedener Perspektiven;
   - Fig. 17: eine Schnittdarstellung der Greifvorrichtung aus Fig. 16 entlang der Linie A-A aus Fig. 16;
   - Fig. 18: eine Schnittdarstellung der Greifvorrichtung aus Fig. 16 entlang der Linie B-B aus Fig. 16;
   - Fig. 19: eine Schnittdarstellung der Greifvorrichtung aus Fig. 16 entlang der Linie C-C aus Fig. 16; und
   - Fig. 20: eine Schnittdarstellung einer erfindungsgemäßen Greifvorrichtung in einer weiteren Ausführungsform.

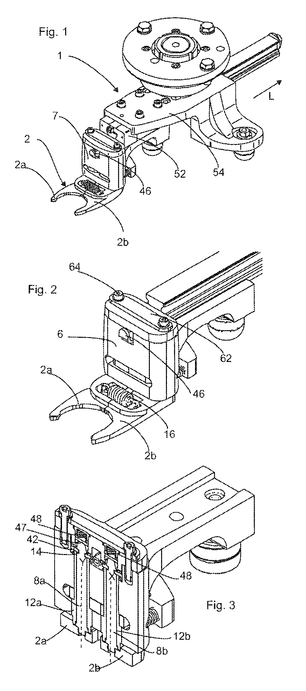

Fig. 1 zeigt eine erfindungsgemäße Vorrichtung 1 zum Greifen von Behältnissen. Diese Vorrichtung weist einen Träger 54 auf, an dem ein Schlitten 52 angeordnet ist, und gegenüber diesem Träger 54 in der Richtung L verschiebbar ist. Auf diese Weise ist es möglich, dass ein an dem Schlitten 52 angeordneter Träger 6 mit einer Greifklammer 2 mit Hilfe einer Kurverbahn verschoben werden kann. Die in Fig. 1 gezeigte Greifvorrichtung ist insbesondere für Transfersterne geeignet, welche die Behältnisse an ihren Hälsen greifen und an weitere Transfereinheiten übergeben. Das Bezugszeichen 46 bezieht sich auf ein Betätigungselement, mit welchem der Benutzer von Hand schnell das Greifelement von dem Träger 6 lösen kann.

Fig. 2 zeigt eine detaillierte Darstellung der Greifvorrichtung aus Fig. 1. Man erkennt, dass der Träger eine Verschlussplatte 62 aufweist, welche mit Schrauben 64 an dem Träger angeordnet ist. Dabei ist es jedoch zu einem Wechsel des Greifelements 2 nicht nötig, diese Platte abzuheben, sondern dies erfolgt, wie oben erwähnt, lediglich über ein Drücken des Betätigungselementes 46. Die Bezugszeichen 2a, 2b beziehen sich auf Greifteile des Greifelements 2, welche die Hälse der Behältnisse aufnehmen können. Diese beiden Greifteile sind dabei in einer Bewegungsebene schwenkbar.

Fig. 3 zeigt eine weitere detaillierte Darstellung der Vorrichtung in teilgeschnittener Ansicht. Man erkennt jetzt, dass die Greifteile 2a, 2b, welche Bestandteil des in Fig. 1 - 2 gezeigten Greifelements 2 sind, jeweils mit einem stiftartigen Körper 8a, 8b in fester Verbindung stehen und gleichzeitig mit diesen um die Achsen X,Y gedreht bzw. geschwenkt werden können. Dabei ist es möglich, dass die stiftartigen Körper bzw. deren untere Enden in die Greifteile 2a, 2b eingepresst sind.

Die Bezugszeichen 12a und 12b beziehen sich auf Hülsenkörper, welche um die stiftartigen Körper 8a, 8b angeordnet sind und welche ebenfalls gemeinsam mit den stiftartigen Körpern 8a, 8b gedreht werden können. Das Bezugszeichen 42 bezieht sich auf ein Einrastmittel, welches in eine entsprechende Umfangsnut 14 der stiftartigen Körper 8a, 8b eingreift. Weiterhin werden die stiftartigen Körper über Federungseinrichtungen 48 und Platten 47 in Fig. 3 nach unten vorgespannt.

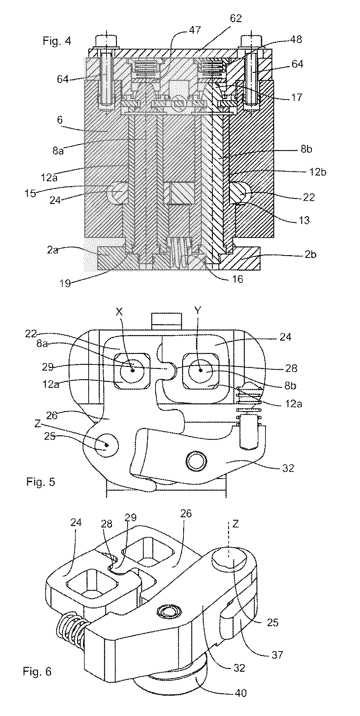

Fig. 4 zeigt eine weitere geschnittene Ansicht einer erfindungsgemäßen Greifvorrichtung. Das Bezugszeichen 16 bezieht sich auf eine Feder, welche die beiden Greifteile 2a und 2b auseinanderdrängt. Die Bewegungsebene der beiden Greifteile liegt senkrecht zu der Figurenebene von Fig. 4. Der Träger 6 weist eine horizontal liegende Ausnehmung 15 auf, in welcher Eingriffsmitel 22 und 24 vorgesehen sind, welche zu einem Drehen bzw. Schwenken der stiftartigen Körper 8a und 8b und damit auch der Greifteile 2a und 2b dienen. Man erkennt, dass die Hülsenkörper 12a und 12b an ihrem unteren Ende in eine Umfangsnut 19 eingreifen, welche zwischen dem stiftartigen Körper 8a und 8b und den Greifteilen 2a und 2b gebildet werden.

Mit Hilfe dieses Eingriffs entsteht eine drehfeste Verbindung zwischen den Hülsenkörpern 12a, 12b und den Greifteilen 2a und 2b. Gleichzeitig dienen die Hülsenkörper 12a und 12b zur Führung der stiftartigen Körper 8a, 8b. Die stiftartigen Körper 8a, 8b weisen ein sich verjüngendes oberes Ende 17 auf, welches, wie oben gesagt, durch die Federungseinrichtung 48 in Fig. 4 nach unten vorgespannt wird. Die Federungseinrichtung 48 stützen sich wiederum gegenüber der oben erwähnten Verschlussplatte 62 ab. Die hülsenartigen Körper 12a, 12b weisen Stufen 13 auf, oberhalb denen die Eingriffsmittel 22, 24 eingreifen bzw. gegenüber denen sich die Eingriffsmittel 22, 24 abstützen. Dabei weist der Hülsenkörper 12a, 12b jedenfalls oberhalb der Stufe 13 bevorzugt einen kantigen Außenquerschnitt auf, damit er durch eine Drehbewegung der Eingriffsmittel 22, 24 mitgedreht werden kann.

Fig. 5 zeigt eine Draufsicht auf die Vorrichtung in dem Bereich, in dem die Drehung der Hülsenkörper 12a, 12b und damit auch der stiftartigen Körper 8a, 8b bewirkt wird. Man erkennt, dass in diesem Bereich die Hülsenkörper 12a, 12b einen im Wesentlichen quadratischen Außenquerschnitt aufweisen. Die Eingriffsmittel weisen entsprechend einen quadratischen Innenquerschnitt auf. Das Bezugszeichen 26 bezieht sich auf einen Betätigungsarm, mit dem die Hülse 12a gedreht werden kann. Dieser Betätigungsarm 26 ist einteilig mit dem Eingriffsmittel 22 ausgebildet.

An diesem Betätigungsarm 26 ist ein Vorsprung 29 vorgesehen, der in eine Ausnehmung 28 eines zweiten Eingriffsmittels 24 eingreift. Auf diese Weise kann der Betätigungsarm 26 um die Schwenkachse X geschwenkt werden und auf diese Weise erreicht werden, dass gleichzeitig das Eingriffsmittel 24 um die Achse Y geschwenkt wird. Es wäre jedoch auch möglich, den Betätigungsarm 26 einteilig mit dem Hülsenkörper 12a auszubilden.

Auch wäre es möglich, dass an dem Betätigungsarm 26 bzw. dem Eingriffsmittel 22 eine Nut bzw. ein Eingriffsmittel vorgesehen ist und anstelle dessen ein Vorsprung an dem zweiten Eingriffsmittel 24.

Das Bezugszeichen 32 bezieht sich auf einen Betätigungshebel, der wiederum mit dem Betätigungsarm 26 verbunden ist.

Fig. 6 zeigt eine perspektivische Darstellung der in Fig. 6 beschriebenen Betätigungseinheit. Dabei erkennt man, dass der Betätigungsarm 26 und der Betätigungshebel 32 ebenfalls über eine Schwenkeinrichtung 25 miteinander verbunden sind, welche ein geringfügiges Schwenken des Betätigungshebels 32 gegenüber dem Betätigungsarm 26 erlaubt. Dabei ist genauer gesagt der Betätigungshebel 32 in geringen Maßen gegenüber dem Betätigungsarm 26 um die Achse Z schwenkbar. Das Bezugszeichen 40 bezieht sich auf ein an dem Betätigungshebel 32 angeordnetes Steuerelement, das beispielsweise von einer Kurvenbahn geführt werden kann, um die Greifvorrichtung zu öffnen bzw. zu schließen.

Dabei ist es möglich, dass dieses Steuerelement 40 drehbar gegenüber dem Betätigungshebel 32 angeordnet ist.

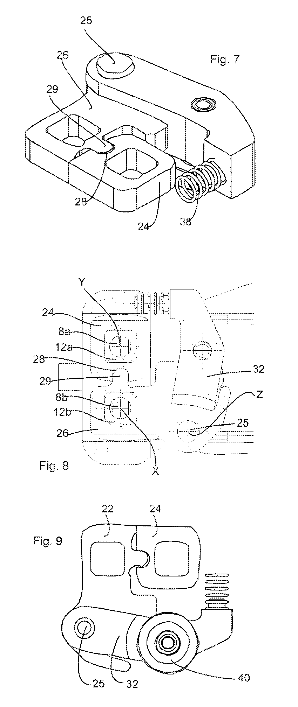

Fig. 7 zeigt eine weitere perspektivische Darstellung der in Fig. 6 gezeigten Einheit. Man erkennt hier die Federungseinheit 38, welche hier die Greifteile 2a und 2b in Richtung der Schließstellung d.h. entgegen der Kraft der Feder 16 vorspannt. Damit sind bei den in den Figuren gezeigten Anordnungen zwei Federn vorgesehen, welche einander entgegenwirken.

Fig. 8 zeigt eine weitere detaillierte Darstellung der erfindungsgemäßen Vorrichtung. Man erkennt auch hier, dass durch eine Betätigung des Betätigungsarms 26 auch gleichzeitig das Eingriffselement 24 betätigt wird. Dabei sind die durch die stiftartigen Körper 8b und 8a festgelegten Schwenkachsen stationär, wohingegen die weitere Schwenkachse Z, um welche der Betätigungshebel 32 gegenüber dem Betätigungsarm 26 schwenkbar ist, nicht stationär ist.

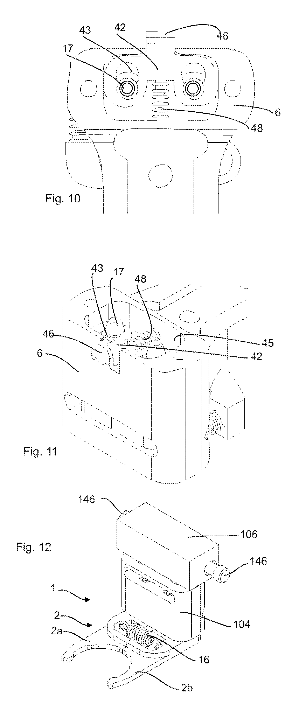

Fig. 9 zeigt schematisch die in Fig. 8 gezeigte Vorrichtung in einer Ansicht von unten. Man erkennt auch hier wieder das Steuerelement 40, welches zum Öffnen und Schließen der Klammer verwendet wird. Fig. 10 zeigt den Mechanismus, der zum Lösen des Greifelements 2 von dem Träger 6 verwendet wird. Dieser Mechanismus weist ein Einrastmittel 42 auf, welches an dem Träger 6 angeordnet ist. Dieses Einrastmittel 42 weist eine Öffnung 43 auf, welche sich, wie in Fig. 10 gezeigt, in einer Richtung erweitert. Durch ein Eindrücken des Betätigungselements 46 entgegen der Kraft der Feder 48 kann das Einrastmittel 42 in Fig. 10 nach unten verschoben werden und auf diese Weise erreicht werden, dass die Köpfe 17 oberhalb der Öffnungen 43 liegen. In dieser Situation können die Enden 17 der stiftartigen Körper gelöst und nach unten heraus gezogen werden.

Fig. 11 zeigt eine perspektivische Darstellung des Öffnungsmechanismus. Man erkennt auch hier, dass durch ein Drücken des Betätigungselements 46 der Eingriff zwischen dem Einrastmittel 42 und den Enden 17 der stiftartigen Körper 8a, 8b gelöst werden kann. Dabei ist das Einrastmittel in einer Ausnehmung 45 angeordnet. Wie oben erwähnt, ist oberhalb der Enden 17 jeweils ein Federungsmittel vorgesehen, welches die Enden 17 und damit auch die stiftartigen Körper 8 nach unten vorspannt.

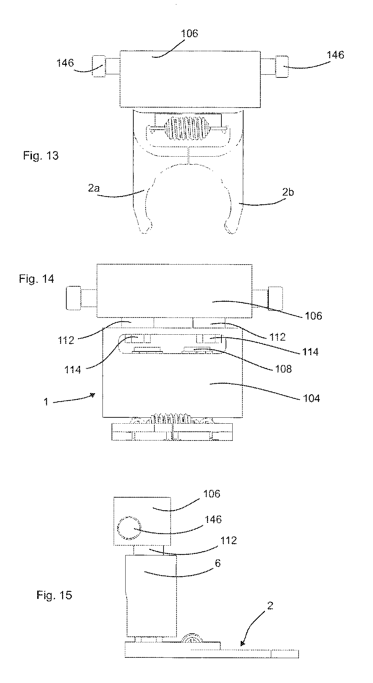

Fig. 12 und 13 zeigen eine weitere Ausführungsform einer erfindungsgemäßen Greifvorrichtung 1 . Die Greifteile 2a, 2b selbst sind hier in ähnlicher Weise ausgeführt wie bei der oben beschriebenen Ausführungsform. Der Arretiermechanismus ist hier jedoch in anderer Weise gestaltet. Die beiden Greifteile 2a, 2b sind hier schwenkbar, jedoch nicht lösbar an einer Halterung 104 angeordnet. Diese Halterung ist dabei in ähnlicher Weise ausgestaltet wie der Träger 6 der vorangegangenen Ausführungsformen, insbesondere ist die Erzeugung der Schwenkbewegung der Greifteile in ähnlicher Weise ausgeführt.

Bei der in den Fig. 12 und 13 gezeigten Ausführungsform ist jedoch die Halterung 104 gemeinsam mit den Greifteilen 2a, 2b lösbar an einem Träger 106 angeordnet. Zum Lösen der Halterung 104 von dem Träger 106 sind zwei Betätigungselemente 146 vorgesehen, welche zusammengedrückt werden können.

Fig. 14 zeigt eine Ansicht von vorne auf eine erfindungsgemäße Greifvorrichtung. In dieser Ansicht sind Verbindungselemente 112 erkennbar, die mittels Schrauben 114 fest an der Halterung 104 angeordnet sind. Diese Verbindungselemente sind lösbar an dem Träger 106 angeordnet. In der in Fig. 15 gezeigten Darstellung ist erkennbar, dass die Verbindungselemente 112 seitlich gegenüber dem Betätigungselement 146 versetzt ist.

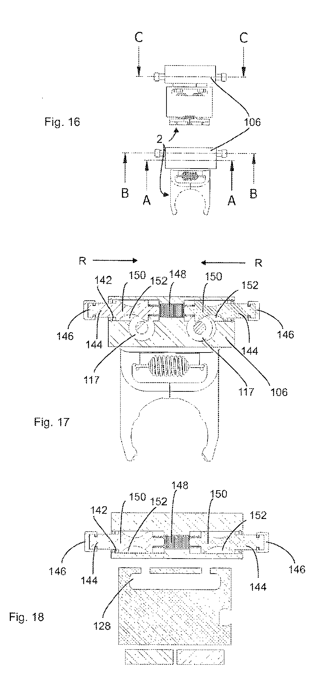

Fig. 16 zeigt zwei Ansichten der in Fig. 12 gezeigten Greifvorrichtung 1 zur Veranschaulichung der in den Fig. 17 - 19 gezeigten Schnitte. In Fig. 17 ist dabei ein Schnitt entlang der Linie C - C aus Fig. 16 dargestellt. Man erkennt hierbei insbesondere die im Inneren des Trägers 106 angeordneten Elemente. Die beiden Betätigungselemente 146 können dabei zusammengepresst werden und wirken dabei auf Arretierkörper 144, die ebenfalls entlang der Richtung R gegenüber dem Träger 106 verschiebbar sind. Eine Feder 148 presst diese beiden Arretierkörper 144 auseinander. In dieser Auseinandergepressten Situation ist eine Arretierung der Halterung 104 an dem Träger 106 gewährleistet.

Genauer gesagt, weisen die beiden Arretierkörper 144 Arretierabschnitte 150 mit jeweils einer Ausnehmung 152 auf, die sich in einer Umfangsrichtung der Arretierkörper 144 erstreckt. Diese Ausnehmung kann gegenüber Köpfen 117, welche Bestandteil der Verbindungselemente 112 sind, verschoben werden. Nur wenn beide Betätigungselemente 146 gedrückt sind, kann demnach die Halterung 104 von dem Träger 106 gelöst werden. Auf diese Weise kann ein versehentliches Lösen der Verbindung gelöst werden.

Fig. 18 zeigt einen Schnitt entlang der Linie B - B aus Fig. 16. Dabei bezieht sich das Bezugszeichen 128 auf eine Ausnehmung, in der die beiden Schrauben 114 zum Befestigen der Verbindungselemente 112 angeordnet werden können.

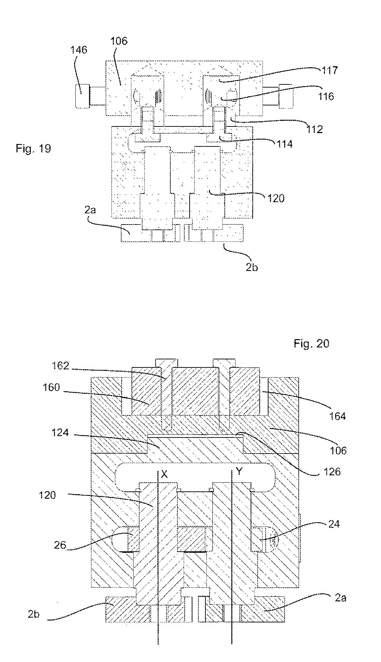

Fig. 19 zeigt einen Schnitt entlang der Linie A - A aus Fig. 16. Dabei sind hier wieder stiftartige Körper 120 vorgesehen, welche fest an den Greifteilen 2a, 2b angeordnet sind und zum Schwenken dieser Greifteile 2a, 2b dienen. Bei dieser Ausführungsform nehmen diese stiftartigen Körper auch die Funktion der hülsenförmigen Körper bei der in den Fig. 1 - 11 gezeigten Ausführungsform wahr, d.h. die Greifteile 2a, 2b werden durch ein Drehen dieser beiden stiftartigen Körper 120 geschwenkt. Die stiftartigen Körper können hier sowohl als Hohlkörper als auch als Vollkörper ausgeführt sein. Im Gegensatz zu den obigen Ausführungsformen haben die stiftartigen Körper 120 jedoch nicht die Aufgabe, einen Arretier- und Lösemechanismus zu bilden. Die Drehung der stiftartigen Körper erfolgt, wie in den Figuren 4 - 6 veranschaulicht.

Bei der in den Fig. 12 - 19 gezeigten Ausführungsform sind die Verbindungselemente 112 fest an der Halterung 104 und lösbar an dem Träger 106 angeordnet. Es wäre jedoch auch möglich, die Verbindungselemente 112 fest an dem Träger 106 und lösbar an der Halterung 104 vorzusehen. Auch könnte ein Verbindungselement fest an der Halterung 104 vorgesehen sein und ein anderes Verbindungselement fest an dem Träger 106.

Fig. 20 zeigt eine weitere Ausführungsform einer erfindungsgemäßen Greifvorrichtung. Die Greifteile 2a, 2b sowie die Halterung sind dabei in ähnlicher Weise ausgebildet wie bei der in den Figuren 12 - 19 gezeigten Ausführungsform. Unterschiedlich ist hier jedoch der Arretiermechanismus mit dem Träger 106 ausgebildet.

An der Halterung ist ein Vorsprung 124 vorgesehen, der in eine Ausnehmung 126 ragt, welche in dem Träger 106 ausgebildet ist. Durch das Zusammenspiel dieses Vorsprungs 124 und dieser Ausnehmung 126 wird die Position des Trägers 106 gegenüber der Halterung 104 festgelegt. Das Bezugszeichen 160 bezieht sich auf einen Magneten und insbesondere einen Permanentmagneten, der in einer Ausnehmung 164 des Trägers 106 angeordnet ist. Dieser Magnet 160 zieht die Halterung 104, welche zumindest teilweise aus einem magnetischen oder magnetisierbaren Material ausgebildet ist, an und fixiert auf diese Weise die Halterung 104 an dem Träger 106.

Damit ist es möglich, die Halterung 104 mit den Greifteilen 2a, 2b unter Überwindung der magnetischen Anziehungskraft von dem Träger 106 zu lösen. Der Magnet 160 ist dabei mittels Schrauben 162 fest in der Ausnehmung 164 angeordnet. Es wäre jedoch auch möglich, einen Bereich der Halterung 104 als Permanentmagneten auszuführen.

Bei einer weiteren Ausführungsform ist ein (nicht gezeigtes) Betätigungselement vorgesehen, mit der die Position des Magneten 160 innerhalb der Ausnehmung 164 verändert werden kann, beispielsweise der Magnet 160 innerhalb der Ausnehmung 164 angehoben werden kann. Auf diese Weise kann die Magnetkraft zwischen dem Magneten 160 und der Halterung 104 verringert werden und anschließend die verbleibende Magnetkraft leichter überwunden werden, um die Halterung 104 von dem Träger 106 zu lösen.

### Bezugszeichenliste

| | |
|---|---|
| 2 | Greifklammer |
| 2a,2b | Greifteile |
| 6,54 | Träger |
| 8a,8b | stiftartiger Körper |
| 12a,12b | Hülsenkörper |
| 13 | Stufen |
| 14 | Umfangsnut |
| 15 | Ausnehmung des Trägers 6 |
| 16 | Feder |
| 17 | sich verjüngendes oberes Ende |
| 19 | ringförmige Ausnehmung in Greifteil |
| 22,24 | Eingriffsmittel |
| 25 | Schwenkeinrichtung |
| 26 | Betätigungsarm |
| 28 | Ausnehmung |
| 29 | Vorsprung |
| 38 | Federungseinheit |
| 32 | Betätigungshebel |
| 40 | Steuerelement |
| 42 | Einrastmittel |
| 43 | Öffnung |
| 46 | Betätigungselement |
| 47 | Platte |
| 48 | Federungseinrichtung |
| 52 | Schlitten |
| 62 | Verschlussplatte |
| 104 | Halterung |
| 106 | Träger |
| 112 | Verbindungselement |
| 114 | Schrauben |
| 120 | stiftartiger Körper |
| 124 | Vorsprung |
| 126 | Ausnehmung |
| 128 | Ausnehmung |
| 144 | Arretierkörper |
| 146 | Betätigungselement |
| 150 | Arretierabschnitt |
| 152 | Ausnehmung |
| 160 | Magnet |
| 164 | Ausnehmung |
| | |
| L | Richtung |
| X, Y, Z | Schwenkachsen |

## Patentansprüche

1. Greifvorrichtung (1) zum Greifen von Behältnissen mit einem Greifelement (2), welches zwei relativ zueinander bewegliche Greifteile (2a, 2b) aufweist, wobei zwischen diesen Greifteilen (2a, 2b) wenigstens ein Abschnitt des zu greifenden Behältnisses aufnehmbar ist, und mit einem Träger (6) an dem die Greifteile (2a, 2b) angeordnet sind, und wobei die Greifteile (2a, 2b) in einer vorgegebenen Bewegungsebene schwenkbar sind, und wobei an jedem Greifteil (2a, 2b) fest ein stiftartiger Körper (8a, 8b) angeordnet ist, wobei sich die stiftartigen Körper (8a, 8b) im Wesentlichen senkrecht zu der Bewegungsebene der Greifteile (2a, 2b) erstrecken und die Greifteile (2a, 2b) jeweils um eine durch die stiftartigen Körper festgelegte Schwenkachse (X,Y) schwenkbar sind,
**dadurch gekennzeichnet dass** der Träger (6) einen entgegen der Kraft einer Feder (48) verschiebaren Arretierkörper aufweist, wobei ein an dem Arretierkörper vorgesehenes, erstes Einrastmittel (42) mit einem an wenigstens einem der stiftartigen Körper (8a, 8b) vorgesehenen, zweiten Einrastmittel (14) zusammenwirkt, wobei das Greifelement (2) durch die Zusammenwirkung des ersten Einrastmittels (42) mit dem zweiten Einrastmittel (14) an dem Träger (6) fixiert ist und durch das Verschieben des Arretierkörpers manuell und ohne Zuhilfenahme von Werkzeug von dem Träger (106) gelöst werden kann.

2. Greifvorrichtung (1) zum Greifen von Behältnissen mit einem Greifelement (2), welches zwei relativ zueinander bewegliche Greifteile (2a, 2b) aufweist, wobei zwischen diesen Greifteilen (2a, 2b) wenigstens ein Abschnitt des zu greifenden Behältnisses aufnehmbar ist, mit einem Träger (106) und mit einer Halterung (104) an der die Greifteile (2a, 2b) angeordnet sind, und wobei die Greifteile (2a, 2b) in einer vorgegebenen Bewegungsebene schwenkbar sind, und wobei an jedem Greifteil (2a, 2b) fest ein stiftartiger Körper (120) angeordnet ist, wobei sich die stiftartigen Körper (120) im Wesentlichen senkrecht zu der Bewegungsebene der Greifteile (2a, 2b) erstrecken und die Greifteile (2a, 2b) jeweils um eine durch die stiftartigen Körper festgelegte Schwenkachse (X, Y) schwenkbar sind,
**dadurch gekennzeichnet dass** die Greifeinrichtung (1) einen entgegen der Kraft einer Feder (148) verschiebaren Arretierkörper (144) und ein Verbindungselement (112) aufweist, wobei ein an dem Arretierkörper (144) vorgesehenes, erstes Einrastmittel (150) mit einem an dem Verbindungselement (112) vorgesehenen, zweiten Einrastmittel (117) zusammenwirkt, wobei entweder das Verbindungselement (112) fest an der Halterung (104) und der Arretierkörper (144) an dem Träger (106) angeordnet sind, oder das Verbindungselement (112) fest an dem Träger (106) und der Arretierkörper (144) an der Halterung (104) angeordnet sind, wobei die Halterung (104) gemeinsam mit den Greifteilen (2a, 2b) durch die Zusammenwirkung des ersten Einrastmittels (150) mit dem zweiten Einrastmittel (117) an dem Träger (106) fixiert ist und durch das Verschieben des Arretierkörpers (144) manuell und ohne Zuhilfenahme von Werkzeug von dem Träger (106) gelöst werden kann.

3. Greifvorrichtung (1) zum Greifen von Behältnissen mit einem Greifelement (2), welches zwei relativ zueinander bewegliche Greifteile (2a, 2b) aufweist, wobei zwischen diesen Greifteilen (2a, 2b) wenigstens ein Abschnitt des zu greifenden Behältnisses aufnehmbar ist, mit einem Träger (106) und mit einer Halterung (106) an der die Greifteile (2a, 2b) angeordnet sind, und wobei die Greifteile (2a, 2b) in einer vorgegebenen Bewegungsebene schwenkbar sind, und wobei an jedem Greifteil (2a, 2b) fest ein stiftartiger Körper (120) angeordnet ist, wobei sich die stiftartigen Körper (120) im Wesentlichen senkrecht zu der Bewegungsebene der Greifteile (2a, 2b) erstrecken und die Greifteile (2a, 2b) jeweils um eine durch die stiftartigen Körper festgelegte Schwenkachse (X, Y) schwenkbar sind,
**dadurch gekennzeichnet dass** die Halterung (104) für die Greifteile (2a, 2b) zumindest teilweise aus einem magnetischen oder magnetisierbaren Material ausgebildet ist und dass ein Magnet (160) an dem Träger (106) angeordnet ist, wobei die Halterung (104) durch den Magneten (160) gemeinsam mit den Greifteilen (2a, 2b) an dem Träger (106) fixiert ist und somit manuell und ohne Zuhilfnahme von Werkzeug von dem Träger (106) gelöst werden kann.

4. Greifvorrichtung (1) nach einem der Ansprüche 1-3, **dadurch gekennzeichnet, dass** um wenigstens einen Bereich jedes stiftartigen Körpers (8a, 8b; 120) ein Hülsenkörper (12a, 12b) angeordnet ist.

5. Greifvorrichtung (1) nach Ansprüche 1 und 4, **dadurch gekennzeichnet, dass** wenigstens ein stiftartiger Körper (8a, 8b) gegenüber dem ihn zugeordneten Hülsenkörper (12a, 12b) in einer Längsrichtung (L) des stiftartigen Körpers verschiebbar ist.

6. Greifvorrichtung (1) nach wenigstens einem der vorangegangenen Ansprüche 4 und 5, **dadurch gekennzeichnet, dass** die Vorrichtung (1) Eingriffsmittel (22, 24) aufweist, welche die Hülsenkörper (12a, 12b) drehfest mit den Greifteilen (2a, 2b) verbinden.

7. Greifvorrichtung (1) nach wenigstens einem der vorangegangenen Ansprüche 4-6, **dadurch gekennzeichnet, dass** an den Hülsenkörpern (12a, 12b) zusammenwirkende Eingriffsmittel (22, 24) vorgesehen sind, welche bewirken, dass bei Drehung eines Hülsenkörpers (12a) auch der andere Hülsenkörper (12b) gedreht wird.

8. Greifvorrichtung (1) nach wenigstens einem der vorangegangenen Ansprüche 4-7, **dadurch gekennzeichnet, dass** an einem der Hülsenkörper (12a) ein Betätigungsarm (26) angeordnet ist.

9. Greifvorrichtung (1) nach Anspruch 8, **dadurch gekennzeichnet, dass** die Greifvorrichtung (1) einen Betätigungshebel (32) aufweist, der zur Herbeiführung einer Schwenkbewegung des Betätigungsarms (26) mit diesem zusammenwirkt.

10. Greifvorrichtung (1) nach wenigstens einem der vorangegangenen Ansprüche 6-9, **dadurch gekennzeichnet, dass** die Eingriffsmittel (22, 24) von den stiftartigen Körpern (8a, 8b) in einer radialen Richtung der stiftartigen Körper vollumfänglich beabstandet sind.

11. Greifvorrichtung (1) nach wenigstens einem der vorangegangenen Ansprüche, **dadurch gekennzeichnet, dass** wenigstens ein stiftartiger Körper (8a, 8b; 120) oder ein Hülsenkörper (12a, 12b) in wenigstens einem Abschnitt einen von einer Kreisform abweichenden Querschnitt aufweist.

## Claims

1. Gripping apparatus (1) for gripping containers, comprising a gripping element (2) which has two gripping parts (2a, 2b) that can move relative to one another, wherein at least one portion of the container to be gripped can be received between these gripping parts (2a, 2b), and comprising a carrier (6) on which the gripping parts (2a, 2b) are arranged, and wherein the gripping parts (2a, 2b) are pivotable in a predefined movement plane, and wherein a pin-like body (8a, 8b, 120) is fixedly arranged on each gripping part (2a, 2b), wherein the pin-like bodies (8a, 8b) extend essentially perpendicular to the movement plane of the gripping parts (2a, 2b) and the gripping parts (2a, 2b) are in each case pivotable about a pivot axis (X, Y) defined by the pin-like bodies **characterised in that**
the carrier (6) comprises an arresting means, which is displaceable against the force of a spring (48), wherein a first latching means (42) provided on the arresting means cooperates with a second latching means (14) provided on at least one pin-like body (8a, 8b), wherein the gripping element (2) is fixed to the carrier (6) by means of the cooperation of the first latching means (42) and the second latching means(14) and can by detached from the carrier (6) manually and without the aid of a tool by a displacement of the arresting means.

2. Gripping apparatus (1) for gripping containers, comprising a gripping element (2) which has two gripping parts (2a, 2b) that can move relative to one another, wherein at least one portion of the container to be gripped can be received between these gripping parts (2a, 2b), and comprising a carrier (106) and a holding device (104) on which the gripping parts (2a, 2b) are arranged, and wherein the gripping parts (2a, 2b) are pivotable in a predefined movement plane, and wherein a pin-like body (8a, 8b, 120) is fixedly arranged on each gripping part (2a, 2b), wherein the pin-like bodies (8a, 8b) extend essentially perpendicular to the movement plane of the gripping parts (2a, 2b) and the gripping parts (2a, 2b) are in each case pivotable about a pivot axis (X, Y) defined by the pin-like bodies
**characterised in that**
the gripping apparatus comprises an arresting means (144), which is displaceable against the force of a spring (148), as well as a connection element (112) wherein a first latching means (150) provided on the arresting means (144) cooperates with a second latching means (117) provided on the connection element (112), wherein either the connection element (112) is arranged fixedly at the holding device (104) and the arresting device (114) is arranged on the carrier (106) or the connection element (112) is arranged fixedly on the carrier (106) and the arresting device is arranged on the holding device (104) wherein the holding device is fixed to the carrier (106) commonly with the gripping parts by means of the cooperation of the first latching means (150) and the second latching means (117) and can be detached from the carrier (6) manually and without the aid of a tool by a displacement of the arresting means (144).

3. Gripping apparatus (1) for gripping containers, comprising a gripping element (2) which has two gripping parts (2a, 2b) that can move relative to one another, wherein at least one portion of the container to be gripped can be received between these gripping parts (2a, 2b), and comprising a carrier (106) and a holding device (104) on which the gripping parts (2a, 2b) are arranged, and wherein the gripping parts (2a, 2b) are pivotable in a predefined movement plane, and wherein a pin-like body (8a, 8b) is fixedly arranged on each gripping part (2a, 2b), wherein the pin-like bodies (8a, 8b) extend essentially perpendicular to the movement plane of the gripping parts (2a, 2b) and the gripping parts (2a, 2b) are in each case pivotable about a pivot axis (X, Y) defined by the pin-like bodies
**characterised in that**
the holding device (104) for the gripping device (2a, 2b) consists at least partially of a magnetic or magnetisable material and **in that** a magnet (160) is arranged on the carrier (106), wherein the holding device (104) is fixed together with the gripping parts on the carrier (106) by means of the magnet (160), and can be detached from the carrier (6) manually and without the aid of a tool.

4. Gripping apparatus (1) according to at least one of the preceding claims 1 - 3, **characterised in that** a sleeve body (12a, 12b) is arranged around at least one region of each pin-like body (8a, 8b, 120).

5. Gripping apparatus (1) according to claim 1 and 4, **characterised in that** at least one pin-like body (8a, 8b) can be displaced relative to its associated sleeve body (12a, 12b) in a longitudinal direction (L) of the pin-like body.

6. Gripping apparatus (1) according to at least one of the preceding claims 4 and 5, **characterised in that** the apparatus (1) comprises engagement means (22, 24) which connect the sleeve bodies (12a, 12b) to the gripping parts (2a, 2b) so that they rotate together.

7. Gripping apparatus (1) according to at least one of the preceding claims 4 to 6, **characterised in that** cooperating engagement means (22, 24) are provided on the sleeve bodies (12a, 12b) so that, in the event of a rotation of one sleeve body (12a), the other sleeve body (12b) is also rotated.

8. Gripping apparatus (1) according to at least one of the preceding claims 4 to 7, **characterised in that** an actuation arm (26) is arranged on one sleeve body (12a).

9. Gripping apparatus (1) according to claim 8, **characterised in that** the apparatus (1) comprises an actuation lever (32) which cooperates with the actuation arm (26) in order to bring about a pivoting movement of the latter.

10. Gripping apparatus (1) according to at least one of the preceding claims 6 to 9, **characterised in that** the engagement means (22, 24) are spaced apart from the pin-like bodies (8a, 8b) in a radial direction of the pin-like bodies, around the entire circumference thereof.

11. Gripping apparatus (1) according to at least one of the preceding claims, **characterised in that** at least one pin-like body (8a, 8b, 120) or a sleeve body (12a, 12b) has in at least one portion a cross-section which differs from a circular shape.

## Revendications

1. Dispositif de préhension (1) pour la saisie de récipients avec un élément de préhension (2) pourvu de deux pièces de préhension (2a, 2b) mobiles l'une par rapport à l'autre, au moins une partie du récipient à saisir pouvant être logée entre lesdites pièces de préhension (2a, 2b), et dans lequel les pièces de préhension (2a, 2b) sont disposées contre un support (6), les pièces de préhension (2a, 2b) pouvant pivoter sur un plan de déplacement défini, un corps en forme de goupille (8a, 8b) étant fixement disposé contre chaque pièce de préhension (2a, 2b), les corps en forme de goupille (8a, 8b) s'étendant sensiblement perpendiculairement au plan de déplacement des pièces de préhension (2a, 2b) et les pièces de préhension (2a, 2b) pivotant chacune autour d'un axe de pivotement (X, Y) défini par les corps en forme de goupille,
**caractérisé en ce que** le support (6) comporte un corps d'arrêt déplaçable contre la force d'un ressort (48), un premier moyen d'enclenchement (42) prévu sur le support (6) coopérant avec un deuxième moyen d'enclenchement (14) prévu sur au moins un des corps en forme de goupille (8a, 8b), l'élément de préhension (2) étant fixé contre le support (6) grâce à la coopération du premier moyen d'enclenchement (42) et du deuxième moyen d'enclenchement (14), et pouvant être détaché du support (6) manuellement et sans l'aide d'un outil, par déplacement du corps d'arrêt.

2. Dispositif de préhension (1) pour la saisie de récipients avec un élément de préhension (2) pourvu de deux pièces de préhension (2a, 2b) mobiles l'une par rapport à l'autre, au moins une partie du récipient à saisir pouvant être logée entre lesdites pièces de préhension (2a, 2b), avec un support (106) et avec une monture (104) contre laquelle les pièces de préhension (2a, 2b) sont disposées, et les pièces de préhension (2a, 2b) pouvant pivoter sur un plan de déplacement défini, un corps en forme de goupille (120) étant fixement disposé contre chaque pièce de préhension (2a, 2b), les corps en forme de goupille (120) s'étendant sensiblement perpendiculairement au plan de déplacement des pièces de préhension (2a, 2b) et les pièces de préhension (2a, 2b) pivotant chacune autour d'un axe de pivotement (X, Y) défini par les corps en forme de goupille,
**caractérisé en ce que** ledit dispositif de préhension (1) comporte un corps d'arrêt (144) déplaçable à l'encontre de la force d'un ressort (148) et un élément de connexion (112), un premier moyen d'enclenchement (150) prévu sur le corps d'arrêt (144) coopérant avec un deuxième moyen d'enclenchement (117) prévu sur l'élément de connexion (112), soit l'élément de connexion (112) étant fixement disposé contre la monture (104) et le corps d'arrêt (144) contre le support (106), soit l'élément de connexion (112) étant fixement disposé contre le support (106) et le corps d'arrêt (144) contre la monture (104), la monture (104) étant fixée avec les pièces de préhension (2a, 2b) sur le support (106) grâce à la coopération du premier moyen d'enclenchement (150) et du deuxième moyen d'enclenchement (117), et pouvant être détachée du support (106) manuellement et sans l'aide d'un outil, par déplacement du corps d'arrêt (144).

3. Dispositif de préhension (1) pour la saisie de récipients avec un élément de préhension (2) pourvu de deux pièces de préhension (2a, 2b) mobiles l'une par rapport à l'autre, au moins une partie du récipient à saisir pouvant être logée entre lesdites pièces de préhension (2a, 2b), avec un support (106) et avec une monture (104) contre laquelle les pièces de préhension (2a, 2b) sont disposées, et les pièces de préhension (2a, 2b) pouvant pivoter sur un plan de déplacement défini, un corps en forme de goupille (120) étant fixement disposé contre chaque pièce de préhension (2a, 2b), les corps en forme de goupille (120) s'étendant sensiblement perpendiculairement au plan de déplacement des pièces de préhension (2a, 2b) et les pièces de préhension (2a, 2b) pivotant chacune autour d'un axe de pivotement (X, Y) défini par les corps en forme de goupille,
**caractérisé en ce que** la monture (104) pour les pièces de préhension (2a, 2b) est réalisée au moins partiellement dans un matériau magnétique ou magnétisable, et **en ce qu'**un aimant (160) est disposé sur la support (106), la monture (104) étant fixée avec les pièces de préhension (2a, 2b) sur le support (106) par l'aimant (160), et pouvant ainsi être détachée du support (106) manuellement et sans l'aide d'un outil.

4. Dispositif de préhension (1) selon une des revendications 1 à 3, **caractérisé en ce qu'**un corps de douille (12a, 12b) est disposé autour d'au moins une partie de chaque corps en forme de goupille (8a, 8b ; 120).

5. Dispositif de préhension (1) selon les revendications 1 et 4, **caractérisé en ce qu'**au moins un corps en forme de goupille (8a, 8b) est déplaçable dans la direction longitudinale (L) du corps en forme de goupille par rapport au corps de douille (12a, 12b) correspondant.

6. Dispositif de préhension (1) selon au moins une des revendications 4 et 5, **caractérisé en ce que** ledit dispositif (1) comporte des moyens d'engagement (22, 24), lesquels raccordent les corps de douille (12a, 12b) aux pièces de préhension (2a, 2b) de manière solidaire en rotation.

7. Dispositif de préhension (1) selon au moins une des revendications 4 à 6, **caractérisé en ce que** des moyens d'engagement (22, 24) coopérant entre eux sont prévus sur les corps de douille (12a, 12b), lesquels entraînent la rotation d'un corps de douille (12b) en cas de rotation de l'autre corps de douille (12a).

8. Dispositif de préhension (1) selon au moins une des revendications 4 à 7, **caractérisé en ce qu'**un bras d'actionnement (26) est disposé sur un corps de douille (12a).

9. Dispositif de préhension (1) selon la revendication 8, **caractérisé en ce que** ledit dispositif (1) comporte un levier d'actionnement (32), lequel coopère avec le bras d'actionnement (26) pour entraîner le pivotement de celui-ci.

10. Dispositif de préhension (1) selon au moins une des revendications 6 à 9, **caractérisé en ce que** les moyens d'engagement (22, 24) sont espacés sur toute leur périphérie des corps en forme de goupille (8a, 8b) dans la direction radiale des corps en forme de goupille.

11. Dispositif de préhension (1) selon au moins une des revendications précédentes, **caractérisé en ce qu'**au moins un corps en forme de goupille (8a, 8b ; 120) ou un corps de douille (12a, 12b) présentent sur au moins un segment une section transversale de forme autre que circulaire.
